# FASCICULE DE BREVET EUROPEEN

(11) **EP 4 375 789 B1**
(45) Date de publication et mention de la délivrance du brevet: **16.09.2026**
(21) Numéro de dépôt: 24166521.5
(22) Date de dépôt: 01.08.2022
(51) Int. Cl.: F16P 3/24, B60K 28/14, B62B 5/00, E01C 19/28, B62D 51/00, G05G 5/04, E01C 19/20

(54) **ENGIN ROULANT AUTOMOTEUR, NOTAMMENT DE DÉPOSE AU SOL DE MATÉRIAUX EN VRAC DE REVÊTEMENT POUR ROUTE**
SELBSTFAHRENDES FAHRBARES GERÄT, INSBESONDERE ZUM VERLEGEN VON SCHÜTT- UND STRASSENBAUMATERIAL AUF DEM BODEN
SELF-PROPELLED WHEELED VEHICLE, IN PARTICULAR FOR REMOVING BULK MATERIALS FROM THE GROUND FOR ROAD SURFACES

(43) Date de publication de la demande: 29.05.2024
(62) Numéro(s) de document de la (des) demande(s) initiale(s) en application de l'article 76 CBE: 22306162.3 / 4 317 760
(73) Titulaire: SECMAIR, 53230 Cosse-le-Vivien (FR)
(72) Inventeur: PARAGE, Gilles, 53000 LAVAL (FR)
(74) Mandataire: Regimbeau

(56) Documents cités:
- FR-A1- 3 051 204
- US-A- 4 496 265

## Description

L'invention concerne un engin roulant automoteur, notamment pour la dépose au sol, de matériaux en vrac de revêtement pour route.

Le domaine de l'invention concerne les engins ayant un réservoir de stockage et de distribution des matériaux en vrac, pouvant être notamment des gravillons, du sable ou de l'asphalte.

De tels engins roulants sont donc lourds et comportent par conséquent un moteur pour entraîner une ou plusieurs roues motrices au sol.

Ainsi, il est connu d'équiper l'engin roulant d'un guidon pour permettre à un utilisateur de piloter l'engin en direction.

Le document FR3051204A1 décrit un engin roulant automoteur selon le préambule de la revendication 1.

L'un des problèmes de ces engins roulants automoteurs tient à la possibilité que l'engin puisse reculer sur l'utilisateur. En effet, dans ce cas, l'engin, du fait de son poids, risque de blesser utilisateur.

L'invention vise à obtenir un engin roulant automoteur permettant d'améliorer la sécurité pour l'utilisateur, afin de résoudre le problème mentionné ci-dessus.

Un objet de l'invention est un engin roulant automoteur suivant la revendication 1.

Les revendications 2 à 13 concernent des modes de réalisation de l'engin suivant la revendication 1.

Suivant un mode de réalisation de l'invention, la garde d'anti - écrasement de l'utilisateur est située derrière la poignée de commande dans la deuxième position de commande en marche arrière de la poignée de commande.

Suivant un mode de réalisation de l'autre objet de l'invention, l'engin roulant comporte un manchon monté rotatif autour de l'axe sur le guidon,
la poignée de commande et la garde d'anti - écrasement de l'utilisateur étant fixées sur le manchon.

Suivant un mode de réalisation de l'autre objet de l'invention, la garde d'anti - écrasement de l'utilisateur comporte une languette ayant une première partie d'extrémité fixée au manchon, une deuxième partie d'extrémité située à proximité de la poignée de commande et à distance du manchon et une partie intermédiaire s'étendant de la première partie d'extrémité à la deuxième partie d'extrémité et située au moins en partie plus en arrière que la poignée de commande et que le guidon dans la deuxième position de commande en marche arrière de la poignée de commande.

Suivant un mode de réalisation de l'autre objet de l'invention, la deuxième partie d'extrémité est fixée à la poignée de commande à distance du manchon.

Suivant un mode de réalisation de l'autre objet de l'invention, la poignée de commande est rectiligne.

Suivant un mode de réalisation de l'autre objet de l'invention, la garde d'anti - écrasement de l'utilisateur occupe un secteur angulaire, non nul, qui est centré sur l'axe et qui est situé plus en arrière que la poignée de commande et que le guidon dans la deuxième position de commande en marche arrière de la poignée de commande.

Suivant un mode de réalisation de l'autre objet de l'invention, le secteur angulaire de la garde d'anti - écrasement de l'utilisateur s'étend au moins d'un plan horizontal arrière passant par l'axe du guidon à la poignée de commande dans la deuxième position de commande en marche arrière de la poignée de commande.

Suivant un mode de réalisation de l'autre objet de l'invention, la garde d'anti - écrasement de l'utilisateur a une surface extérieure qui s'étend dans le secteur angulaire et qui se rapproche de l'axe en allant au moins d'un premier point arrière à un deuxième point avant, lequel est plus éloigné angulairement de la poignée de commande que le premier point arrière par rapport à l'axe dans la deuxième position de commande en marche arrière.

Suivant un mode de réalisation de l'autre objet de l'invention, la garde d'anti - écrasement de l'utilisateur est en forme de C, situé plus en arrière que la poignée de commande et que le guidon dans la deuxième position de commande en marche arrière de la poignée de commande, le C ayant une ouverture tournée vers l'avant dans la deuxième position de commande en marche arrière de la poignée de commande.

Suivant un mode de réalisation de l'autre objet de l'invention, la garde d'anti - écrasement de l'utilisateur comporte des segments rectilignes faisant des angles obtus entre eux et situés plus en arrière que la poignée de commande et que le guidon dans la deuxième position de commande en marche arrière de la poignée de commande.

Suivant un mode de réalisation de l'autre objet de l'invention, la garde d'anti - écrasement de l'utilisateur a une première largeur suivant l'axe, qui est plus grande qu'une deuxième largeur de la poignée de commande suivant l'axe.

Suivant un mode de réalisation de l'autre objet de l'invention, l'engin roulant comporte un câble de traction et de poussée reliant la poignée de commande au mécanisme de transmission, une tirette d'articulation au câble étant disposée sur l'extérieur du manchon.

L'invention sera mieux comprise à la lecture de la description qui va suivre, donnée uniquement à titre d'exemple non limitatif en référence aux figures ci-dessous des dessins annexés.
La figure 1 est une vue schématique en perspective d'un engin roulant automoteur suivant des modes de réalisation de l'invention.
La figure 2 est une vue schématique en perspective de côté d'une partie d'un guidon de l'engin roulant automoteur suivant des modes de réalisation de l'invention.
Les figures 3 et 4 sont des vues schématiques en perspective de dessous d'une partie du guidon de l'engin roulant automoteur suivant des modes de réalisation de l'invention.
La figure 5 est une vue schématique de l'arrière d'une partie du guidon de l'engin roulant automoteur suivant des modes de réalisation de l'invention.
La figure 6 est une vue schématique en perspective d'une garde de l'engin roulant automoteur suivant des modes de réalisation de l'invention.
La figure 7 est une vue schématique en perspective partielle de la garde de l'engin roulant automoteur suivant des modes de réalisation de l'invention.
La figure 8 est une vue schématique de côté de la garde de l'engin roulant automoteur suivant des modes de réalisation de l'invention.
La figure 9 est une vue schématique de côté de la garde de l'engin roulant automoteur suivant des modes de réalisation de l'invention dans une deuxième position de commande en marche arrière.
La figure 10 est une vue schématique de côté de la garde de l'engin roulant automoteur suivant des modes de réalisation de l'invention dans une troisième position P3 de commande d'arrêt.
La figure 11 est une vue schématique de côté de la garde de l'engin roulant automoteur suivant des modes de réalisation de l'invention dans une première position P1 de commande en marche avant.
La figure 12 est une vue schématique en perspective éclatée d'un réservoir de stockage et de distribution de matériaux en vrac de l'engin roulant automoteur suivant des modes de réalisation de l'invention.
La figure 13 est une vue schématique en perspective agrandie d'une partie de l'engin roulant automoteur suivant des modes de réalisation de l'invention.
La figure 14 est une vue schématique en perspective éclatée agrandie d'un réservoir de stockage et de distribution de matériaux en vrac de l'engin roulant automoteur suivant des modes de réalisation de l'invention.

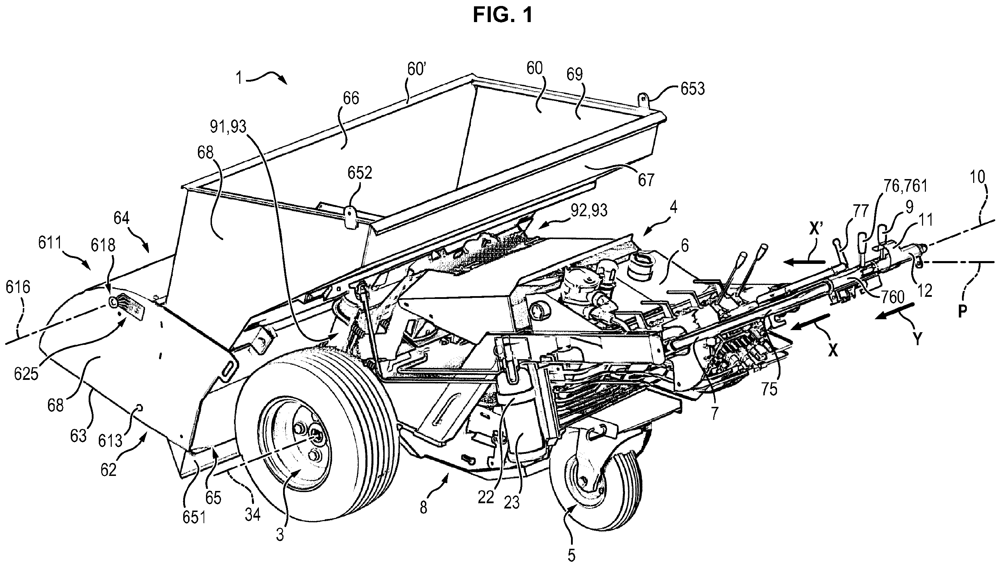

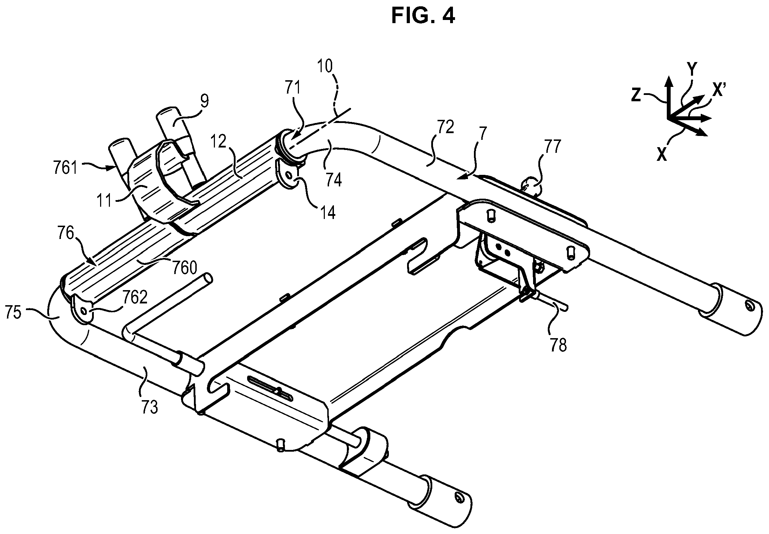

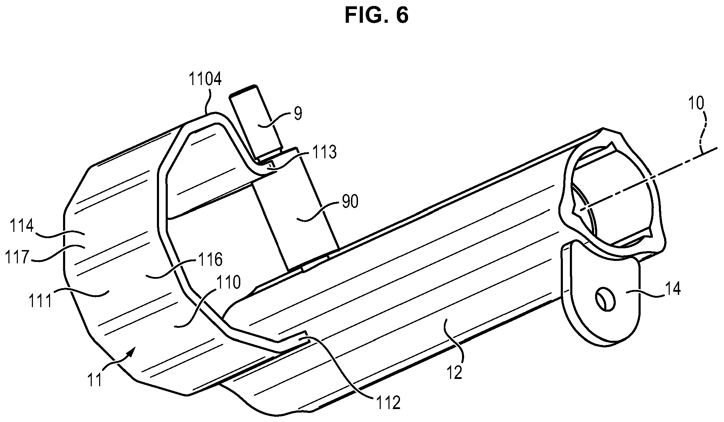

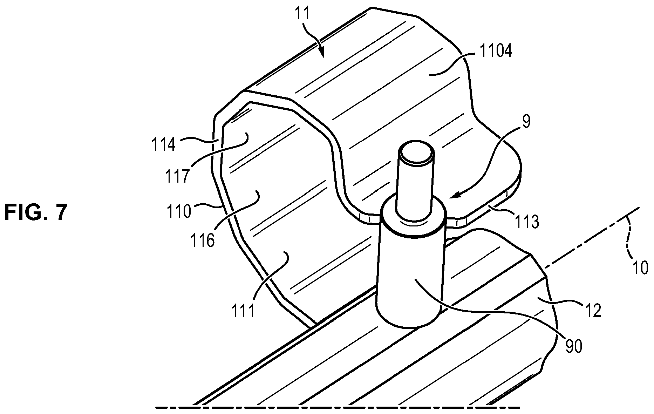

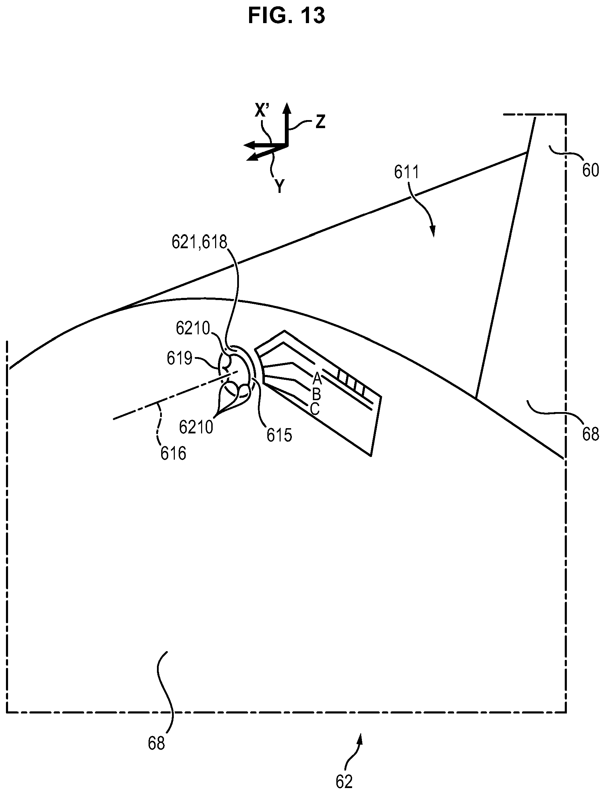

Aux figures 1 à 14 est représenté un engin roulant automoteur 1 prévue pour la dépose au sol, par exemple sous la forme d'un lit ou d'une couche, de matériaux en vrac de revêtement pour routes, chaussées ou autres surfaces. Le matériau en vrac peut être par exemple des granulats ou des gravillons ou du sable ou de l'asphalte ou de l'enrobé bitumineux à chaud ou autre. L'engin 1 comporte un châssis 2 sous lequel sont montées des roues 3, 4, 5 de roulement au sol, montées rotatives sur le châssis 2. Par exemple, les deux-roues 3 et 4 sont motrices. Sur le châssis 2, par exemple à l'avant de celui-ci et devant les roues 3, 4, 5, se trouve un réservoir 60 de stockage et de distribution des matériaux en vrac, destiné à former le revêtement. Par exemple, la roue 3 est prévue à gauche du châssis 2, la roue 4 est prévue à droite du châssis 2 et la roue 5 est prévue en arrière et au milieu par rapport aux 3 et 4.

Sur le châssis 2 se trouve un moteur 6 pour entraîner en rotation la ou les roues motrices 3. Par exemple, le châssis 2 peut être équipé d'un pont hydrostatique auquel chaque roue 3,4 est couplée par un demi-arbre 4, ce pont hydrostatique intégrant un différentiel et étant couplé au moteur 6. Le moteur 6 peut-être un moteur thermique ou un moteur électrique alimenté par du carburant embarqué ou un moteur électrique alimenté par une batterie.

La ou les roues motrices 3, 4 peut être entraînée en rotation vers l'avant ou vers l'arrière par le moteur 6. À cet effet, le châssis 2 porte un mécanisme 8 de transmission entre le moteur 6 et la ou les roues motrices 3, 4. Ce mécanisme 8 de transmission permet de changer le sens d'entraînement en rotation de la ou des roues motrices 3, 4 soit pour imposer un déplacement de l'engin roulant 1 vers l'avant, soit pour imposer un déplacement de l'engin roulant 1 vers l'arrière, soit pour stopper le déplacement de l'engin roulant 1. Ainsi, le mécanisme 8 de transmission est configuré pour relier le moteur 6 d'entraînement à la au moins une roue motrice 3, 4 soit selon une position de liaison en marche avant de la au moins une roue motrice 3, 4, soit selon une position de liaison en marche arrière de la au moins une roue motrice 3, 4, soit selon une position d'arrêt de la au moins une roue motrice 3, 4.

À l'arrière du châssis 2 est disposé un guidon 7 pour l'utilisateur. Le guidon 7 porte une poignée 9 de commande reliée au mécanisme 8 de transmission. La poignée 9 de commande est configurée pour commander le mécanisme 8 de transmission soit dans la position de liaison en marche avant, soit dans la position de liaison en marche arrière, soit dans la position d'arrêt. La poignée 9 de commande est montée rotative ou basculante par rapport à un axe 10 sur le guidon 7. L'utilisateur accompagne en marchant le déplacement de l'engin automoteur 1 en tenant le guidon pour braquer l'engin 1 vers la droite ou vers la gauche et pour faire tourner la poignée 9 de commande entre l'une et l'autre de ses positions P1, P2 et P3. Bien entendu, d'autres commandes pouvant être actionnées par l'utilisateur peuvent être situées sur le guidon 7 ou à proximité du guidon 7.

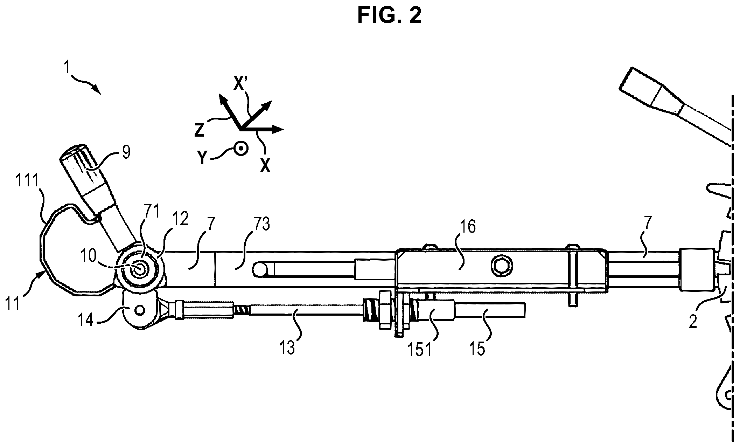

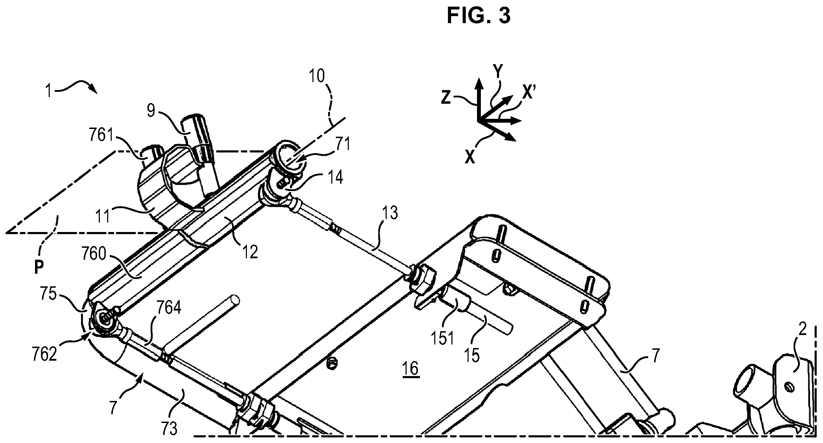

Aux figures, le guidon 7 s'étend suivant une direction longitudinale X, orientée de l'arrière vers l'avant. Cette direction longitudinale X du guidon 7 peut être inclinée par rapport au châssis 2 vers le bas et vers l'avant d'un angle prédéfini, inférieur à 90°, notamment inférieur à 45°, par rapport à la direction générale X' d'avancée de l'engin roulant automoteur 1, ainsi que représenté à titre d'exemple aux figures 1, 3, 9, 10 et 11. La direction orientée de bas en haut est désignée par la direction Z. L'axe 10 s'étend suivant la direction transversale Y, pouvant être perpendiculaire à la direction longitudinale X, à la direction longitudinale X du guidon 7 et à la direction Z. L'axe 10 peut être formé par exemple par une tige transversale 71, formant la partie du guidon 7 située la plus en arrière. Par exemple, le guidon 7 comporte un bras latéral droite 72 (premier bras 72) et un bras latéral gauche 73 (deuxième bras 73), qui sont reliés respectivement à l'extrémité latérale droite 74 et à l'extrémité latérale 75 gauche de sa tige transversale 71 et qui s'étendent parallèlement à la direction longitudinale X du guidon 7 vers l'avant. Le guidon 7 peut-être en forme de U, dont l'ouverture est tournée vers l'avant et vers le bas. Le bras 72 n'a pas été représenté aux figures 2 et 3, ben que présent.

Dans ce qui suit, les termes avant et arrière sont pris par rapport à la direction longitudinale X' d'avancée de l'engin roulant automoteur 1. Cette direction longitudinale X' d'avancée de l'engin roulant automoteur 1 est donc horizontale lorsque l'engin roulant automoteur 1 roule sur un sol horizontal.

Les positions de la poignée 9 de commande sur le guidon 7 sont choisies de la manière suivante.

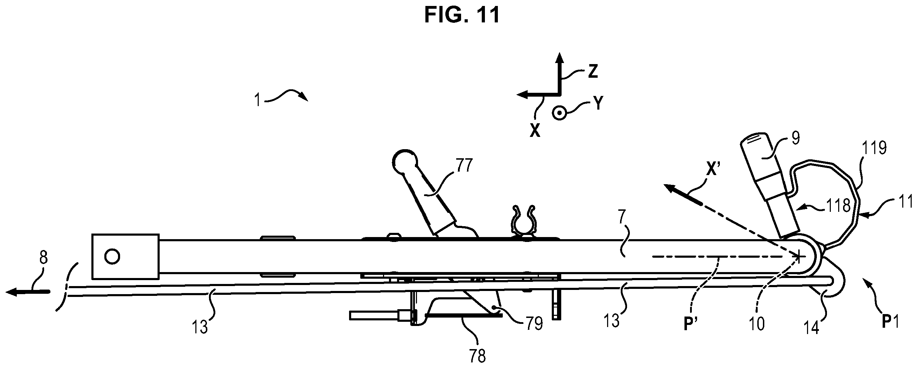

La poignée 9 de commande a une première position P1 de commande en marche avant, pour commander le mécanisme 8 de transmission selon la position de liaison en marche avant, ainsi que représenté à titre d'exemple à la figure 11. Par exemple, la poignée 9 de commande peut dépasser vers l'avant du guidon 7 dans cette première position P1 de commande en marche avant.

La poignée 9 de commande a une deuxième position P2 de commande en marche arrière, pour commander le mécanisme 8 de transmission selon la position de liaison en marche arrière, ainsi que représenté à titre d'exemple aux figures 1, 2, 3, 4, 5 et 9. Par exemple, la poignée 9 de commande peut être sensiblement verticale ou perpendiculaire à la direction longitudinale X' d'avancée de l'engin roulant automoteur 1 dans la deuxième position P2 de commande en marche arrière.

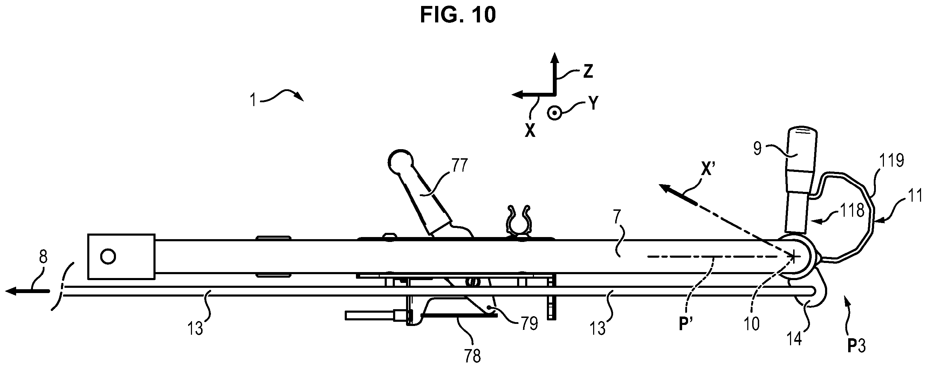

La poignée 9 de commande a une troisième position P3 de commande d'arrêt, pour commander le mécanisme 8 de transmission selon la position d'arrêt, ainsi que représenté à titre d'exemple à la figure 10. Dans cette troisième position P3 de commande d'arrêt, la poignée 9 de commande est située plus en arrière que la première position P1 de commande en marche avant et plus en avant que la deuxième position P2 de commande en marche arrière.

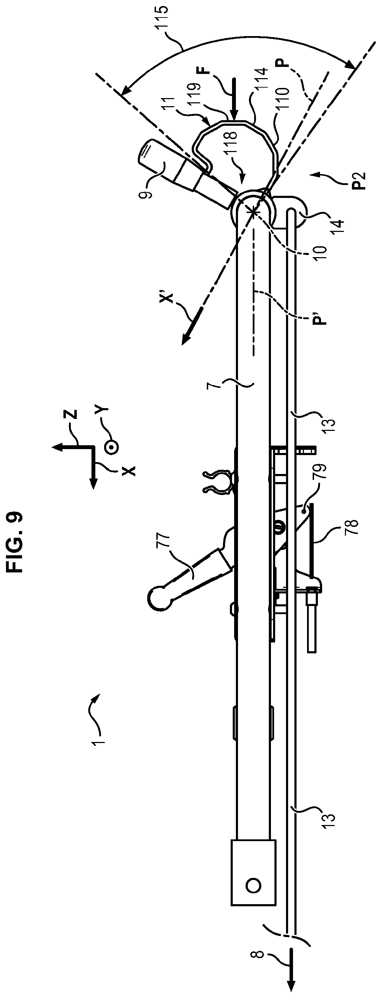

On décrit d'abord ci-dessous l'autre objet de l'invention. Sur le guidon 7 est disposée une garde 11 d'anti - écrasement de l'utilisateur ou dispositif 11 de protection contre l'écrasement de l'utilisateur. La garde 11 d'anti - écrasement de l'utilisateur est solidaire en rotation de la poignée 9 de commande autour de l'axe 10 du guidon 7. La garde 11 d'anti - écrasement de l'utilisateur est configurée pour être située plus en arrière que la poignée 9 de commande et plus en arrière que le guidon 7, lorsque cette poignée 9 de commande se trouve dans la deuxième position P2 de commande en marche arrière, ainsi que représenté à titre d'exemple aux figures 1, 2, 3, 4, 5 et 9. Du fait de sa configuration en arrière par rapport à la poignée 9 de commande, la garde 11 d'anti - écrasement de l'utilisateur entraîne en rotation la poignée 9 de commande de la deuxième position P2 de commande en marche arrière à la première position P1 de commande en marche avant ou à la troisième position P3 de commande d'arrêt, lorsqu'une force F vers l'avant est exercée contre la garde 11 d'anti - écrasement se trouvant dans la deuxième position P2 de commande en marche arrière de la poignée 9 de commande, ainsi que représenté à titre d'exemple à la figure 9.

Ainsi, lorsque poignée 9 de commande a été mise dans la deuxième position P2 de commande située en arrière du guidon 7, représentée à titre d'exemple aux figures 1, 2, 3, 4, 5 et 11, l'engin roulant automoteur 1 roule vers l'arrière sur ses roues 3, 4, c'est-à-dire dans le sens inverse de la direction longitudinale X'.

Si, par accident ou par mégarde, l'engin roulant automoteur 1 recule sur l'utilisateur arrêté ou coincé contre un obstacle, la garde 11 d'anti - écrasement, dépassant alors vers l'arrière du guidon 7 dans cette deuxième position P2 de commande en marche arrière, est repoussée immédiatement par le corps de l'utilisateur, qui exerce alors la force F vers l'avant, ce qui fait tourner la poignée 9 de commande vers l'avant par rapport à cette deuxième position P2 de commande en marche arrière, et ce jusqu'à la troisième position P3 d'arrêt de la figure 10, ce qui arrête le déplacement de l'engin roulant automoteur 1 vers l'arrière ou jusqu'à la première position P1 de commande en marche avant de la figure 11, ce qui fait repartir l'engin roulant automoteur 1 vers l'avant.

La garde 11 d'anti - écrasement suivant l'autre objet de l'invention permet ainsi d'assurer que l'engin roulant automoteur 1 en marche arrière ne continue pas de reculer sur l'utilisateur.

Cela n'est pas rendu possible par la poignée 9 de commande lorsqu'elle est prévue seule sans la garde 11 d'anti - écrasement, du fait des faibles dimensions de la poignée 9 de commande ou du fait que la poignée 9 de commande peut ne pas dépasser vers l'arrière dans la deuxième position P2 de commande en marche arrière, la poignée 9 de commande ne serait pas remise à coup sûr dans la troisième position P3 d'arrêt ou dans la première position P1 de commande en marche avant, si elle reculait contre l'utilisateur.

Ainsi, suivant un mode de réalisation de l'autre objet de l'invention, la garde 11 d'anti - écrasement de l'utilisateur a une première largeur L1 suivant l'axe 10, qui est plus grande qu'une deuxième largeur L2 de la poignée 9 de commande suivant la direction transversale Y de l'axe 10, ainsi que représenté par exemple aux figures 3 à 11.

Le fait que la garde 11 d'anti - écrasement soit située encore plus en arrière par rapport à la poignée 9 de commande assure une plus grande sécurité. De plus, la poignée 9 de commande, du fait de sa structure, risquerait quand même de blesser l'utilisateur si elle reculait contre lui.

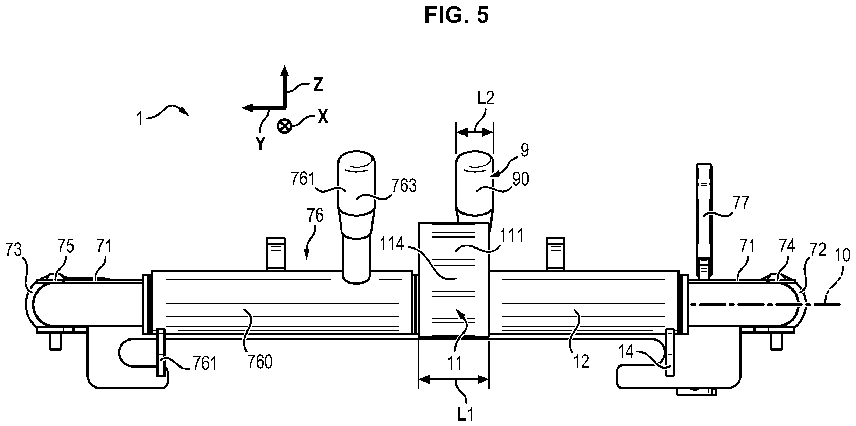

Des modes de réalisation de la structure de la garde 11 d'anti - écrasement de l'utilisateur sont représentés plus en détail aux figures 5, 6, 7 et 8 et sont décrits ci-dessous. Ces modes de réalisation sont combinés entre eux aux figures 1, 2, 3, 4, 5, 6, 7, 8, 9, 10 et 11.

Suivant un mode de réalisation de l'autre objet de l'invention, représenté à titre d'exemple aux figures 1, 2, 3, 4, 5, 6, 7, 8, 9, 10 et 11, la garde 11 d'anti - écrasement de l'utilisateur est située derrière la poignée 9 de commande. La poignée 9 de commande ne risque ainsi pas de heurter l'utilisateur lorsque l'engin roulant automoteur 1 recule.

Suivant un mode de réalisation de l'autre objet de l'invention, représenté à titre d'exemple aux figures 1, 2, 3, 4, 5, 6, 7, 8, 9, 10 et 11, sur le guidon 7 peut être monté un manchon 12 capable de tourner autour de l'axe 10 transversal. Ce manchon 12 entoure par exemple la tige transversale arrière 71 du guidon 7. La poignée 9 de commande est fixée sur l'extérieur du manchon 12, en étant par exemple solidaire du manchon 12 ou d'une seule pièce avec le manchon 12. La garde 11 d'anti - écrasement de l'utilisateur peut être fixée sur l'extérieur du manchon 12, en étant par exemple solidaire du manchon 12 ou d'une seule pièce avec le manchon 12. Autour de la poignée 9 de commande peut être fixé un manche 90.

Suivant un mode de réalisation de l'autre objet de l'invention, représenté à titre d'exemple aux figures 1, 2, 3, 4, 5, 6, 7, 8, 9, 10 et 11, la garde 11 d'anti - écrasement de l'utilisateur comporte une languette 111 rigide, dont une première partie 112 d'extrémité est fixée au manchon 12. Une deuxième partie 113 d'extrémité de la languette 111 est située à proximité de la poignée 9 de commande ou est fixée à la poignée 9 de commande. Cette deuxième partie 113 d'extrémité de la languette 111 est positionnée à distance du manchon 12, en dehors de celui-ci. La languette 111 a une partie intermédiaire 114 s'étendant de la première partie 112 d'extrémité à la deuxième partie 113 d'extrémité. Cette partie intermédiaire 114 de la languette 111 est située au moins en partie, ainsi que représenté aux figures 1, 2, 3, 4, 5 et 9, plus en arrière que la poignée 9 de commande et que le guidon 7 dans la deuxième position P2 de commande en marche arrière de la poignée 9 de commande.

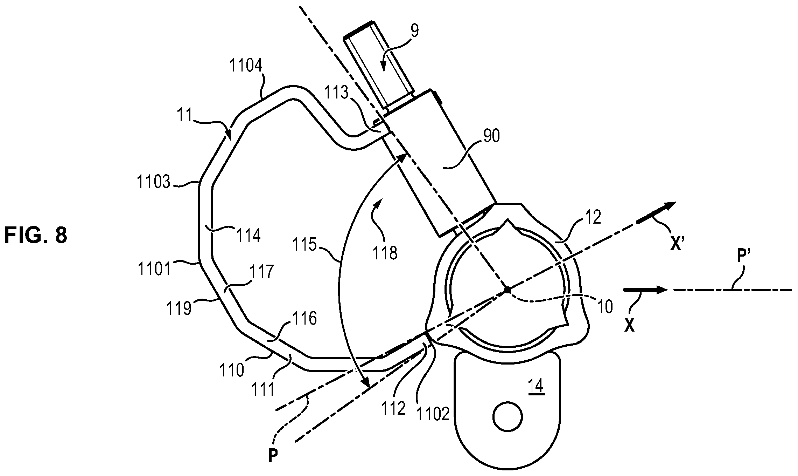

Suivant un mode de réalisation de l'autre objet de l'invention, représenté à titre d'exemple aux figures 1, 2, 3, 4, 5, 6, 7, 8, 9, 10 et 11, la poignée 9 de commande peut être rectiligne en partant du manchon 12, et peut être par exemple radiale vers l'extérieur depuis l'axe 10, ainsi que représenté à titre d'exemple à la figure 8.

Suivant un mode de réalisation de l'autre objet de l'invention, la garde 11 d'anti - écrasement de l'utilisateur, à savoir la partie intermédiaire 114 de la languette 111, décrite ci-dessus, occupe autour de l'axe 10 un secteur angulaire 115, non nul (secteur angulaire 115 représenté entre les traits mixtes aux figures 8 et 9), situé plus en arrière que la poignée 9 de commande et que le guidon 7 dans la deuxième position P2 de commande en marche arrière de la poignée 9 de commande, ainsi que représenté à titre d'exemple aux figures 1, 2, 3, 4, 5, 8 et 9.

Suivant un mode de réalisation de l'autre objet de l'invention, lorsque la poignée 9 de commande est dans la deuxième position P2 de commande en marche arrière aux figures 1, 2, 3, 4, 5, 8 et 9, le secteur angulaire 115 de la garde 11 d'anti - écrasement de l'utilisateur s'étend au moins d'un plan horizontal arrière P (représenté par les traits interrompus non mixtes aux figures 1, 8 et 9) passant par l'axe 10 du guidon 7 jusqu'à la poignée 9 de commande.

Suivant un mode de réalisation de l'autre objet de l'invention, représenté à titre d'exemple aux figures 1, 2, 3, 4, 5, 6, 7, 8, 9, 10 et 11, la garde 11 d'anti - écrasement de l'utilisateur, à savoir la partie intermédiaire 114 de la languette 111 décrite ci-dessus, a une surface extérieure 110 (ou came 110) qui s'étend dans le secteur angulaire 115 et qui se rapproche de l'axe 10 en allant d'un premier point arrière 1101 à un deuxième point avant 1102, lequel est plus éloigné angulairement de la poignée 9 de commande que le point arrière 1101 par rapport à l'axe 10 (ces points 1101 et 1102 étant représentés à la figure 8). Le premier point arrière 1101 est par exemple le point 1101 de la surface extérieure 110 situé le plus en arrière dans la deuxième position P2 de commande en marche arrière. Bien entendu, la surface extérieure 110 peut continuer de s'éloigner de l'axe 10 au-delà du premier point arrière 1101 en se rapprochant de la poignée 9 de commande, et ce par exemple jusqu'au troisième point 1103. Puis, la garde 11 d'anti - écrasement de l'utilisateur, à savoir la partie intermédiaire 114 de la languette 111 décrite ci-dessus, a à partir du troisième point 1103, une autre surface extérieure 1104 qui se rapproche de l'axe 10 en se rapprochant de la poignée 9 de commande.

La surface extérieure 110 de la garde 11 d'anti - écrasement de l'utilisateur peut ainsi être en forme de came allant vers le haut, dans le cas où la poignée 9 de commande dépasse vers le haut dans la deuxième position P2 de commande en marche arrière.

Ainsi, le recul de l'engin 1 et de la garde 11 d'anti - écrasement contre l'utilisateur se transforme-t-il plus facilement en rotation vers l'avant de la garde 11 d'anti - écrasement et donc de la poignée 9 de commande (et vers le haut aux figures).

Dans d'autres modes de réalisation non représentés, la surface extérieure 110 de la garde 11 d'anti - écrasement peut être en forme de came allant vers le bas, dans le cas où la poignée 9 de commande dépasse vers le bas dans la deuxième position P2 de commande en marche arrière.

Suivant un mode de réalisation de l'autre objet de l'invention, représenté à titre d'exemple aux figures 1, 2, 3, 4, 5, 6, 7, 8, 9, 10 et 11, la garde 11 d'anti - écrasement de l'utilisateur est en forme de C, situé plus en arrière que la poignée 9 de commande et que le guidon 7 dans la deuxième position P2 de commande en marche arrière de la poignée 9 de commande. Le C a une ouverture 118 tournée vers l'avant dans la deuxième position P2 de commande en marche arrière de la poignée 9 de commande, et un dos 119 (ses surfaces extérieures 110, 1104) tourné vers l'arrière dans la deuxième position P2 de commande en marche arrière de la poignée 9 de commande, ainsi que représenté à titre d'exemple aux figures 1, 2, 3, 4, 5 et 9.

Suivant un mode de réalisation de l'autre objet de l'invention, représenté à titre d'exemple aux figures 1, 2, 3, 4, 5, 6, 7, 8, 9, 10 et 11, la garde 11 d'anti - écrasement de l'utilisateur comporte des segments rectilignes 116,117 faisant des angles obtus entre eux et situés plus en arrière que la poignée 9 de commande et que le guidon 7 dans la deuxième position P2 de commande en marche arrière de la poignée 9 de commande.

Suivant un autre mode de réalisation de l'autre objet de l'invention, la garde 11 d'anti - écrasement de l'utilisateur peut être courbe, par exemple en forme de C décrite ci-dessus et peut être circulaire ou autre et peut ne pas comporter de segments rectilignes 116,117.

Suivant un mode de réalisation de l'autre objet de l'invention, représentée aux figures 2, 3,9, 10 et 11, l'engin roulant 1 comporte un câble 13 de traction et de poussée reliant la poignée 9 de commande au mécanisme 8 de transmission. Une tirette 14 d'articulation au câble 13 est prévue sur l'extérieur du manchon 12. Ce câble 13 n'a pas été représenté dans les autres figures, bien que présent. Le câble 13 peut-être monté coulissant vers l'avant et vers l'arrière dans une gaine 15 dont une extrémité arrière est fixée par une attache 151 à un support 16 lui-même fixé au guidon 7, ainsi que représenté à titre d'exemple aux figures 2 et 3. Par exemple le support 16 est fixé au bras latéral droite 72 et au bras latéral gauche 73 et est situé en avant de la tige transversale 71.

Suivant un mode de réalisation de l'autre objet de l'invention, représenté aux figures 2, 3, 8, 9, 10 et 11, la tirette 14 d'articulation est située de l'autre côté d'un plan P' (X, Y) du guidon 7 passant par l'axe 10 par rapport à la poignée 9 de commande. La première position P1 de commande en marche avant de la poignée 9 de commande correspondant à une première position de la tirette 14 d'articulation et du câble 13, située plus en arrière qu'une troisième position de la tirette 14 d'articulation et du câble 13 dans la troisième position P3 de commande d'arrêt, elle-même située plus en arrière qu'une deuxième position de la tirette 14 d'articulation et du câble 13 dans la deuxième position P2 de commande en marche arrière. Ainsi, dans ce mode de réalisation, la traction vers l'arrière du câble 13 par la tirette 14 fait passer le mécanisme 8 de transmission de la position de liaison en marche arrière à la position d'arrêt, ou de la position d'arrêt à la position de liaison en marche avant. Inversement, la poussée vers l'avant du câble 13 par la tirette 14 sous la poussée du levier formé par la poignée 9, le manchon 12 et la garde 11 fait passer le mécanisme 8 de transmission de la position de liaison en marche avant à la position d'arrêt, ou de la position d'arrêt à la position de liaison en marche arrière.

Suivant un autre mode de réalisation de l'autre objet de l'invention, non représenté, la tirette 14 d'articulation est située du même côté du plan P' (X, Y) du guidon 7 passant par l'axe 10 que la poignée 9 de commande. La première position P1 de commande en marche avant de la poignée 9 de commande correspondant à une première position de la tirette 14 d'articulation et du câble 13, située plus en arrière qu'une troisième position de la tirette 14 d'articulation et du câble 13 dans la troisième position P3 de commande d'arrêt, elle-même située plus en arrière qu'une deuxième position de la tirette 14 d'articulation et du câble 13 dans la deuxième position P2 de commande en marche arrière. Ainsi, dans ce mode de réalisation, la traction vers l'arrière du câble 13 par la tirette 14 fait passer le mécanisme 8 de transmission de la position de liaison en marche avant à la position d'arrêt, ou de la position d'arrêt à la position de liaison en marche arrière. Inversement, la poussée vers l'avant du câble 13 par la tirette 14 sous la poussée du levier formé par la poignée 9, le manchon 12 et la garde 11 fait passer le mécanisme 8 de transmission de la position de liaison en marche arrière à la position d'arrêt, ou de la position d'arrêt à la position de liaison en marche avant.

On décrit ci-dessous des caractéristiques de l'engin roulant automoteur 1 suivant l'invention, représentées à titre d'exemple aux figures 1, 12, 13 et 14. Les caractéristiques ci-dessous peuvent être prévues indépendamment de la garde 11 d'anti - écrasement de l'utilisateur décrite ci-dessus, ou en combinaison avec la garde 11 d'anti - écrasement de l'utilisateur décrite ci-dessus.

Suivant l'invention, le châssis 2 porte sous le réservoir 60 une table inférieure 63 de lissage et un bord 65 d'attaque disposé, transversalement au sens X' de déplacement de l'engin, c'est-à-dire suivant la largeur de l'engin 1. Le réservoir 60 comporte, en partie inférieure formant fond du réservoir 60, une (ou plusieurs) ouverture inférieure 62 de déchargement, en vue de la dépose d'un lit de matériau en vrac d'épaisseur contrôlée. L'ouverture inférieure 62 de déchargement est placée entre le bord 65 d'attaque et la table 63 de lissage. La table 63 de lissage est solidaire du réservoir 60. Le châssis 2 roulant est monté à basculement autour de l'axe 34 de rotation des roues 3, 4 motrices par l'intermédiaire desquelles il repose au sol pour le passage de l'engin 1 d'une configuration dite de travail dans laquelle la table 63 de lissage est en contact d'appui avec le sol à une configuration dite de transport dans laquelle la table 63 de lissage est écartée du sol.

Le réservoir 60 et la table 63 de lissage forment un ensemble 64 de travail, qui est mobile et réglable en position par l'intermédiaire de moyens 93 de liaison au châssis 2. Les moyens 93 de liaison sont configurés pour permettre, au moins dans la position dans laquelle les roues 3, 4, 5 du châssis 2 roulant reposent sur un sol plan horizontal et la table 63 de lissage s'étend parallèlement au sol, à écartement non nul du sol, d'une part, un déplacement en hauteur de la table 63 de lissage et de l'ouverture 62 de déchargement par rapport au châssis 2 par déplacement en montée ou baisse de l'ensemble 64 de travail dans le sens d'un écartement ou d'un rapprochement du sol, et, d'autre part, un déplacement en inclinaison de la table 63 de lissage de manière à former un angle ANG non nul entre le plan de la table 63 de lissage et l'axe 34 de rotation des roues 3, 4.

Un premier mode d'application de l'engin 1 peut prévoir qu'il soit sur ses roues 3, 4 et 5, par exemple pour l'épandage de gravillons par le réservoir 60. Dans ce cas, une bavette inférieure 651 peut être fixée devant et sous le bord 65 d'attaque dans une position de travail. Cette bavette 651 peut être démontée et fixée par des moyens de fixations amovibles sur une patte 652 prévue sur le haut de la paroi 68 de gauche et sur une patte 653 prévue sur le haut de la paroi 69 de droite, dans une position de rangement.

Un deuxième mode d'application de l'engin 1 peut prévoir qu'il soit incliné vers l'avant avec la roue arrière 52 soulevée du sol, par exemple pour le lissage des matériaux en vrac par la table 63 de lissage, par exemple pour des matériaux en vrac formés par du sable, ou de l'enrobé à chaud ou de l'asphalte. Dans ce deuxième mode d'application, la bavette inférieure 651 n'est pas utilisée, n'est pas fixée devant et sous le bord 65 d'attaque et peut être mise dans la position de rangement.

Suivant l'invention, ces moyens 93 de liaison sont configurés pour un réglage en hauteur et en inclinaison de la table 63 de lissage qui sont au moins partiellement communs.

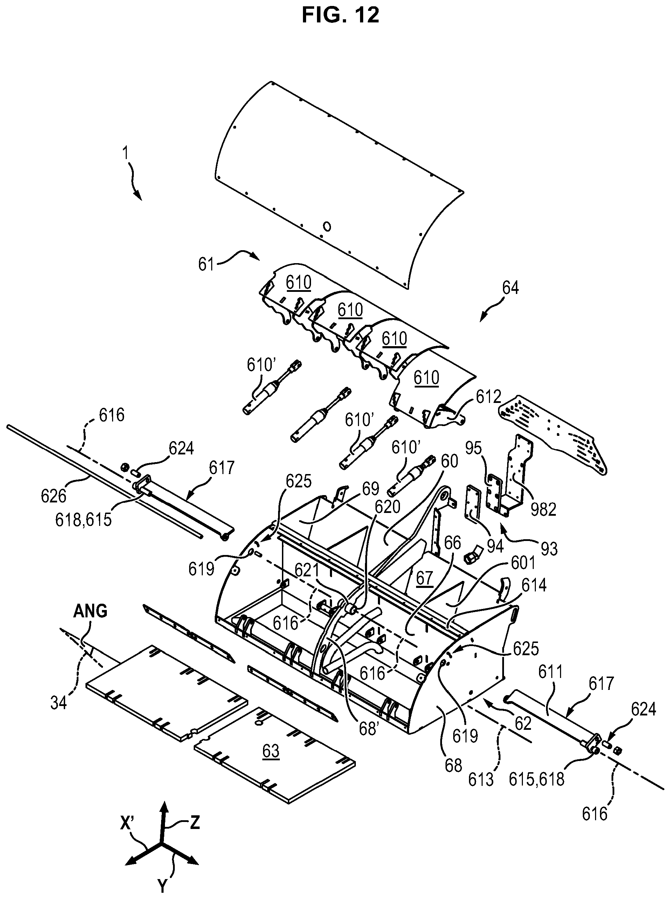

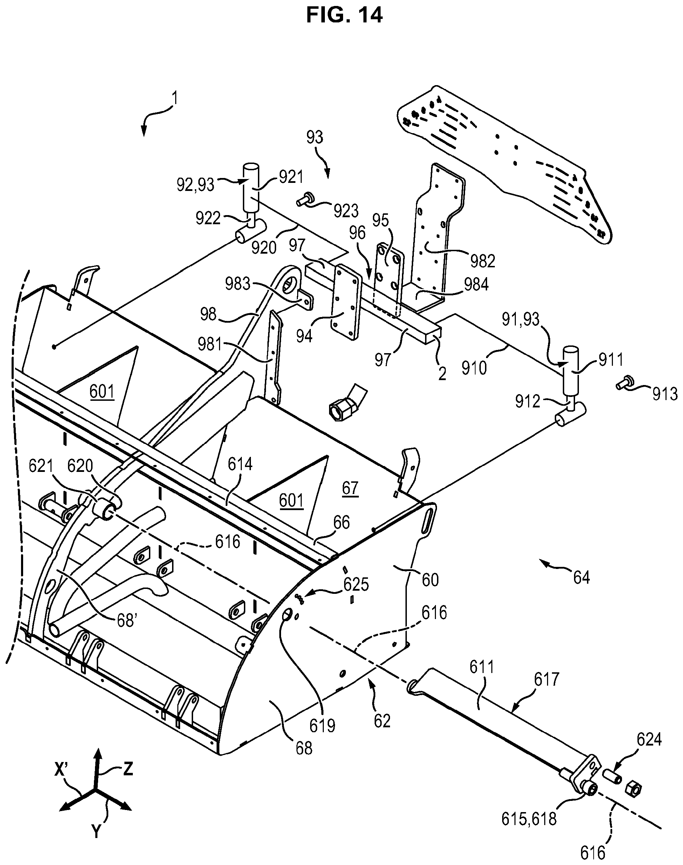

Suivant l'invention, ainsi que représenté aux figures 12 et 14, les moyens 93 de liaison comprennent une plaque avant plane 94 de guidage et une plaque arrière plane 95 de guidage, qui sont parallèles et face l'une à l'autre, qui s'étendent transversalement suivant la largeur (direction Y) de l'engin 1 et en hauteur. La plaque avant plane 94 de guidage et la plaque arrière plane 95 de guidage sont fixées au réservoir 60. Une fente 96 ou espace 96 de guidage est définie entre la plaque avant plane 94 de guidage et la plaque arrière plane 95 de guidage.

Les moyens 93 de liaison comprennent au moins un longeron 97 (ou poutre 97), qui est fixé au châssis 2. Le longeron 97 passe dans la fente 96 et se trouve contre la plaque avant plane 94 de guidage et contre la plaque arrière plane 95 de guidage. Le longeron 97 est guidé par la plaque avant plane 94 de guidage et par la plaque arrière plane 95 de guidage pour glisser dans un plan parallèle à celles-ci, transversalement suivant la largeur de l'engin 1 et en hauteur.

Ainsi, le longeron 97, la plaque avant plane 94 de guidage et la plaque arrière plane 95 de guidage sont configurés pour permettre, au moins dans la position dans laquelle les roues 3, 4, 5 du châssis 2 roulant reposent sur un sol plan horizontal et la table 63 de lissage s'étend parallèlement au sol, à écartement non nul du sol, d'une part, un déplacement en hauteur de la table 63 de lissage et de l'ouverture 62 de déchargement par rapport au châssis 2 par déplacement en montée ou baisse de l'ensemble 64 de travail dans le sens d'un écartement ou d'un rapprochement du sol, et, d'autre part, un déplacement en inclinaison de la table 63 de lissage de manière à former un angle non nul entre le plan de la table 63 de lissage et l'axe 34 de rotation des roues 3, 4.

Le glissement du longeron 97 entre les plaques 94 et 95 permet moins de contraintes exercées sur les moyens 93 de liaison que des moyens de liaison latéraux associant une liaison pivot d'un côté (droite ou gauche) du châssis et une liaison à pivotement et à coulissement de l'autre côté (gauche ou droite) du châssis 2. Ainsi, la plaque avant plane 94 de guidage et la plaque arrière plane 95 de guidage peuvent être placés à peu près au milieu de la largeur du réservoir 60, pour diminuer le débattement du longeron par rapport à celles-ci, ce qui diminue les contraintes de force de contact exercées sur ces plaques 94 et 95 et génère moins d'usure que des moyens de liaison latéraux.

De plus, la plaque avant plane 94 de guidage permet de retenir le longeron 97 vers l'avant et donc empêcher le réservoir 60 de basculer vers l'avant. La plaque arrière 95 de guidage permet de retenir le longeron 97 vers l'arrière et donc empêcher le réservoir 60 de basculer vers l'arrière.

La plaque avant plane 94 de guidage et la plaque arrière plane 95 de guidage sont par exemple fixées derrière la paroi arrière 67 du réservoir 60. Par exemple, derrière la paroi arrière 67 du réservoir 60 est fixé un montant 98 auquel sont fixées la plaque avant plane 94 de guidage et la plaque arrière plane 95 de guidage pour maintenir constante la distance d'écartement de la fente 96 entre celles-ci. Une entretoise 984 peut être fixée entre la plaque avant plane 94 de guidage et la plaque arrière plane 95 de guidage et au réservoir 60 pour maintenir constante la distance d'écartement de la fente 96 entre celles-ci. A cet effet, la plaque avant plane 94 de guidage peut être fixée à une première platine 981 solidaire du montant 98. La plaque arrière plane 95 de guidage peut être fixée à une deuxième platine 982 fixée à une patte 983 supérieure du montant 98. La deuxième platine 982 peut être coudée en bas à angle droit vers l'avant pour former l'entretoise 984 disposée sous les plaques 94 et 95. Les fixations de la plaque 94 peuvent être par exemple des vis ou boulons ou autres, mais rentrés dans la plaque 94. Les fixations de la plaque 95 peuvent être par exemple des vis ou boulons ou autres, mais rentrés dans la plaque 95. Le montant 98 s'étend au-dessus de la fente 96.

Suivant une caractéristique de l'invention, les moyens 93 de liaison comprennent deux actionneurs latéraux 91, 92 à actionnement indépendant disposés chacun entre le châssis 2 et l'ensemble 64 de travail mobile. L'actionneur latéral 91 est derrière le côté gauche du réservoir 60 et est écarté par rapport au milieu de la largeur du réservoir 60. L'actionneur latéral 92 est derrière le côté droite du réservoir 60 et est écarté par rapport au milieu de la largeur du réservoir 60.

Suivant une caractéristique de l'invention, chaque actionneur 91, 92 est un vérin latéral 91, 92 dont le corps 911, 921 est fixé par l'intermédiaire d'un troisième bras 910, 920 au châssis 2 et dont la tige 912, 922, montée coulissante dans le corps 911, 921, est fixée à l'ensemble 64 de travail mobile par des organes 913, 923 de fixation (vis ou boulons ou autres). Le vérin latéral 92 est derrière le côté droite du réservoir 60 et est écarté par rapport au milieu de la largeur du réservoir 60. Le vérin latéral 92 est derrière le côté droite du réservoir 60 et est écarté par rapport au milieu de la largeur du réservoir 60.

Les moyens de liaison 91, 92 décrits ci-dessus, ou les actionneurs latéraux 91, 92 décrits ci-dessus, ou les vérins latéraux 91, 92 décrits ci-dessus permettent à l'engin 1 de suivre le relief du sol en ayant l'angle ANG pouvant être non nul pour maintenir l'horizontalité du plan de la table 63 de lissage dans le cas où les roues 3 et 4 ne sont pas à la même hauteur sur le sol, en vue de la dépose d'un lit de matériau en vrac d'épaisseur contrôlée également dans ce cas.

Suivant une caractéristique de l'invention, l'axe longitudinal de chaque vérin 91, 92 s'étend orthogonalement à l'axe 34 de rotation des roues 3, 4. Par exemple, chaque vérin 91, 92 est un peu incliné vers l'arrière, en allant de bas en haut.

Le longeron 97, la plaque avant plane 94 de guidage et la plaque arrière plane 95 de guidage peuvent être prévus en combinaison avec les moyens de liaison 91, 92 décrits ci-dessus, ou avec les actionneurs latéraux 91, 92 décrits ci-dessus, ou avec les vérins latéraux 91, 92 décrits ci-dessus. Ainsi que représenté aux figures 12 et 14, la plaque avant plane 94 de guidage et la plaque arrière plane 95 de guidage peuvent être prévus dans le sens de la largeur entre les moyens de liaison 91, 92 décrits ci-dessus, ou entre les actionneurs latéraux 91, 92 décrits ci-dessus, ou entre les vérins latéraux 91, 92 décrits ci-dessus, et peuvent être prévus par exemple à peu près au milieu de la largeur derrière le réservoir 60.

Suivant une caractéristique de l'invention, les bras 72 et 73 du guidon 7 relient la tige 71 du guidon 7 aux vérins 91, 92. L'un des bras 72, 73 du guidon 7 est couplé à l'un 92 des vérins 91, 92 de manière déplaçable à coulissement le long dudit vérin 92.

Suivant une caractéristique de l'invention, représentée aux figures 1 et 12, le réservoir 60 a une trémie supérieure 60' ouverte par le dessus et est délimité par une paroi transversale avant 66, une paroi transversale arrière 67 et deux parois longitudinales latérales 68 et 69. Le bord 65 d'attaque de la table 63 s'étend en bas de la paroi avant 66 du réservoir 60. L'ouverture 62 de déchargement est une ouverture obturable.

Suivant une caractéristique de l'invention, représentée à la figure 12, le fond du réservoir 60 est compartimenté par des cloisons 601 s'étendant parallèlement à la direction longitudinale X' de déplacement de l'engin 1. Les moyens 61 d'obturation de l'ouverture 62 de déchargement comprennent une série de trappes 610 disposées côte à côte dans le sens de la largeur de l'engin 1. Ces trappes 610 sont montées mobiles entre une position fermée de l'ouverture 62 de déchargement dans laquelle les sont séparées l'une de l'autre par une cloison 601 et une position ouverte de l'ouverture 62 de déchargement dans laquelle les trappes 610 font au moins partiellement saillie du réservoir 60. Au moins l'une des trappes 610 est apte à se déplacer entre la position fermée et la position ouverte indépendamment des autres trappes 610. Ces trappes 610 peuvent être des trappes 610 à profil courbe tourné vers le fond du réservoir 60 en position fermée. Chaque trappe 610 peut être actionnée par un moyen 610' de déplacement individuel par rapport à la table 63 de lissage. Ce moyen 610' de déplacement individuel de chaque trappe 610 peut être par exemple un vérin 610'.

Suivant une caractéristique de l'invention, représentée à la figure 12, chaque trappe 610 est fixée à une branche 612 de support dont une extrémité, située à distance non nulle de la trappe 610, est montée rotative autour d'un axe inférieur transversal 613 situé dans le fond du réservoir 60. Chaque trappe 610 est donc montée rotative autour de l'axe inférieur transversal 613 entre la position fermée et la position ouverte.

Suivant une caractéristique de l'invention, représentée à la figure 12, la paroi avant 66 du réservoir 60 s'étend vers le bas jusqu'à la table inférieure 63 de lissage et comporte au-dessus de la table inférieure 63 de lissage une fente transversale 614, s'étendant donc suivant la direction transversale Y. La fente transversale 614 permet le passage des trappes 610 et leur déplacement dans celle-ci entre l'une et l'autre de leur position ouverte et de leur position fermée.

Suivant une caractéristique de l'invention, représentée à la figure 12, l'engin 1 est équipé d'une (ou plusieurs) traverse 611, servant de butée de fin de course aux trappes 610 en position ouverte. Chaque traverse 611 de butée de fin de course est réglable en position pour faire varier le degré d'ouverture des trappes 610 en position ouverte, et par suite le débit de distribution des matériaux en vrac par l'ouverture 62 de déchargement.

Suivant une caractéristique de l'invention, représentée à la figure 12, l'engin 1 comporte un moyen 615 de réglage en rotation de chaque traverse 611 de butée de fin de course des trappes 610 autour d'un axe transversal 616 de rotation, c'est-à-dire parallèle à la direction Y, pour faire varier le degré d'ouverture des trappes 610 en position ouverte suivant des degrés d'ouverture différents les uns des autres selon différentes positions de réglage en rotation de la traverse 11. En position ouverte, les trappes 610 butent contre un bord 617 de la traverse 611, ce bord 617 étant éloigné d'une distance non nulle de l'axe transversal 616 de rotation. Lorsque plusieurs traverses 617 de butée sont prévues, elles peuvent être par exemple alignées transversalement et comporter chacune leur propre moyen 615 de réglage individuel en rotation, pouvoir être actionné indépendamment l'un de l'autre. Chaque moyen 615 de réglage en rotation de la traverse 611 de butée de fin de course des trappes 610 autour de l'axe transversal 616 de rotation peut être par exemple une bague 618, qui est solidaire de la traverse 611 sur l'axe transversal 616 de rotation et qui traverse un trou 619, lequel est ménagé dans la paroi latérale 68 ou 69 se prolongeant devant la paroi avant 66 et au-dessus de l'axe 613 de rotation des trappes 610. Lorsque plusieurs traverses 611 de butée sont prévues, il peut être prévu une ou plusieurs nervures 68' devant la paroi avant 66 et entre les parois latérales 68 et 69 (et éventuellement, il peut être prévu, en plus de la bague 618, une autre bague 620 traversant un trou 621, lequel est ménagé dans cette nervure 68', la traverse 611 comportant un doigt 622 extrémité monté rotatif dans l'autre bague 620 fixée dans l'autre trou 621.

Suivant une caractéristique de l'invention, représentée aux figure 1, 12 et 13, la bague 618 est accessible de l'extérieur pour pouvoir faire tourner la traverse 611 autour de son axe transversal 616 de rotation, afin qu'ainsi l'utilisateur puisse régler différentes positions de rotation de la traverse 611 autour de l'axe 616 et ainsi régler des degrés d'ouverture différents des trappes 610 en position ouverte. La bague 618 a par exemple une tête creuse 621 accessible de l'extérieur. La tête creuse 621 peut comporter des pans creux 6210 non circulaires (pouvant par exemple être triangulaires à coins arrondis ainsi que représentée à titre d'exemple à la figure 1), pour permettre d'y introduire un outil de forme complémentaire à celle des pans creux 6210 de la tête 621, pour ainsi faire tourner à l'aide de l'outil la tête creuse 621 et la bague 618. La tête creuse 621 peut par exemple dépasser à l'extérieur du trou 619 ou affleurer au bord du trou 619. Le réglage en rotation de la traverse 611 de butée de fin de course des trappes 610 est ainsi rendu plus aisé, avec moins de risques de blessures de l'utilisateur.

Suivant une caractéristique de l'invention, représentée aux figures 1 et 12, l'engin 1 peut comporter un moyen 623 de blocage de la traverse 611 en une ou plusieurs positions de rotation autour de l'axe transversal 616 de rotation. Par exemple, le moyen 623 de blocage de la traverse 611 en une ou plusieurs positions de rotation autour de l'axe transversal 616 de rotation peut comporter une vis 624 (par exemple à bille) pouvant s'indexer dans un flanc de la traverse 611, située en face de la paroi latérale 68 et pouvant être insérée dans un ou plusieurs trous de réglage 625 ménagé dans la paroi latérale 68.

Suivant une caractéristique de l'invention, représentée à la figure 12, il peut être prévu une douille 626 de verrouillage des trappes 610.

Bien entendu, ce qui est décrit ci-dessus pour la paroi latérale 68 peut également être prévu pour la paroi latérale 69.

Suivant une caractéristique de l'invention, le guidon 7 porte une commande 76 d'ouverture et de fermeture des moyens 61 d'obturation (comportant par exemple une ou plusieurs trappes 610) d'une ouverture 62 de déchargement des matériaux en vrac, prévue en partie inférieure du réservoir 60 de stockage et de distribution des matériaux en vrac.

Suivant une caractéristique de l'invention, la commande 76 d'ouverture et de fermeture des moyens 61 d'obturation comporte un autre manchon 760 monté rotatif autour de l'axe 10 transversal, et par exemple entourant la tige transversale arrière 71 du guidon 7. Une autre poignée 761 d'actionnement est fixée sur l'extérieur du manchon 760, en étant par exemple solidaire du manchon 760 ou d'une seule pièce avec le manchon 760. Autour de la poignée 761 de commande peut être fixé un manche 763. Le manchon 760 peut être fixé par une autre tirette 762 à un autre câble 764 relié aux moyens 610' de déplacement individuel des moyens 61 d'obturation (trappe(s) 610) pour les actionner. Les manchons 12 et 760 peuvent être côte à côte le long de la direction transversale Y. Les poignées 9 et 761 peuvent être plus proches l'une de l'autre que des extrémités 74 et 75 de la tige transversale 71 du guidon 7.

Suivant une caractéristique de l'invention, le guidon 7 peut porter une commande 77 d'accélération du moteur 6. La commande 77 d'accélération du moteur 6 peut-être située devant la tige transversale arrière 71 du guidon 7, par exemple sur le support 16. La commande 77 d'accélération du moteur 6 peut être un levier 77 monté rotatif sur le support 16 et permettant d'actionner par une tirette 79 un autre câble 78 relié à un actionneur d'accélération du moteur 6.

Suivant une caractéristique de l'invention, le châssis 2 peut comporter, par exemple sur un côté à droite ou à gauche du moteur 6, un porte-extincteur 22 accessible de l'extérieur, dans lequel peut être rangé et ôté un extincteur 23.

## Revendications

1. Engin roulant automoteur (1), notamment pour la dépose au sol, de matériaux en vrac de revêtement pour route, l'engin (1) comportant un châssis (2), des roues (3, 4, 5) de roulement au sol, montées rotatives sur le châssis,
le châssis (2) portant un moteur (6) d'entraînement d'au moins une roue motrice (3, 4) parmi les roues (3, 4, 5) en rotation, un réservoir (60) de stockage et de distribution des matériaux en vrac et un guidon arrière (7) de manœuvre,
le réservoir (60) comportant au moins une ouverture inférieure (62) de déchargement des matériaux en vrac, l'engin comporte en outre une table inférieure (63) de lissage, le réservoir (60) et la table (63) de lissage forment un ensemble (64) de travail comportant un bord inférieur (65) d'attaque disposé transversalement au sens (X') de déplacement de l'engin, c'est-à-dire suivant la largeur de l'engin (1), l'ensemble (64) de travail est mobile par rapport au châssis (2) par l'intermédiaire de moyens (93) de liaison au châssis (2),
les moyens (93) de liaison étant configurés pour permettre, au moins dans la position dans laquelle les roues (3, 4, 5) reposent sur un sol plan horizontal et la table (63) de lissage s'étend parallèlement au sol, à écartement non nul du sol, d'une part, un déplacement en hauteur de la table (63) de lissage et de l'ouverture (62) de déchargement par rapport au châssis (2) en montée ou baisse de l'ensemble (64) de travail dans le sens d'un écartement ou d'un rapprochement du sol, et, d'autre part, un déplacement en inclinaison de la table (63) de lissage par rapport au châssis (2), de manière à former un angle non nul entre le plan de la table (63) de lissage et l'axe (34) de rotation de la au moins une roue motrice (3, 4),
**caractérisé en ce que**
les moyens (93) de liaison comprennent une plaque avant plane (94) de guidage et une plaque arrière plane (95) de guidage, qui sont fixées au réservoir (60), qui sont parallèles l'une à l'autre, qui s'étendent transversalement suivant la largeur de l'engin (1) et en hauteur et qui définissent entre elles une fente (96),
les moyens (93) de liaison comprennent au moins un longeron (97), qui est fixé au châssis (2) et qui est guidé dans la fente (96) contre la plaque avant plane (94) de guidage et contre la plaque arrière plane (95) de guidage pour permettre que le longeron (97) se déplace parallèlement à la plaque avant plane (94) de guidage et à la plaque arrière plane (95) de guidage transversalement suivant la largeur de l'engin (1) et en hauteur.

2. Engin roulant automoteur suivant la revendication 1, **caractérisé en ce que** les moyens (93) de liaison comprennent deux actionneurs latéraux (91, 92) à actionnement indépendant disposés chacun entre le châssis (2) et l'ensemble (64) de travail mobile.

3. Engin roulant automoteur suivant la revendication 2, **caractérisé en ce que** la plaque avant plane (94) de guidage et la plaque arrière plane (95) de guidage sont prévues dans le sens de la largeur entre les actionneurs latéraux (91, 92).

4. Engin roulant automoteur suivant la revendication 3, **caractérisé en ce que** la plaque avant plane (94) de guidage et la plaque arrière plane (95) de guidage fixées derrière une paroi arrière (67) du réservoir (60).

5. Engin roulant automoteur suivant la revendication 4, **caractérisé en ce que** derrière la paroi arrière (67) du réservoir (60) est fixé un montant (98) auquel sont fixées la plaque avant plane (94) de guidage et la plaque arrière plane (95) de guidage pour maintenir constante la distance d'écartement de la fente (96) entre celles-ci.

6. Engin roulant automoteur suivant la revendication 5, **caractérisé en ce qu'**une entretoise (984) est fixée entre la plaque avant plane (94) de guidage et la plaque arrière plane (95) de guidage et au réservoir (60) pour maintenir constante la distance d'écartement de la fente (96) entre celles-ci.

7. Engin roulant automoteur suivant la revendication 5 ou 6, **caractérisé en ce que** la plaque avant plane (94) de guidage est fixée à une première platine (981) solidaire du montant (98).

8. Engin roulant automoteur suivant l'une quelconque des revendications 5 à 7, **caractérisé en ce que** la plaque arrière plane (95) de guidage est fixée à une deuxième platine (982) fixée à une patte (983) supérieure du montant (98).

9. Engin roulant automoteur suivant l'une quelconque des revendications 6 à 8, lorsqu'elle dépend au moins de la revendication 6, **caractérisé en ce que** la deuxième platine (982) est coudée en bas à angle droit vers l'avant pour former l'entretoise (984) disposée sous les plaques(94, 95).

10. Engin roulant automoteur suivant l'une quelconque des revendications 5 à 9, **caractérisé en ce que** le montant (98) s'étend au-dessus de la fente (96).

11. Engin roulant automoteur suivant l'une quelconque des revendications précédentes, **caractérisé en ce que** l'engin (1) comporte, dans le réservoir (60) de stockage et de distribution des matériaux en vrac, au moins une trappe (610) pouvant être actionnée autour d'un axe inférieur transversal (613) situé dans le fond du réservoir (60) entre au moins une position ouverte d'une ouverture inférieure (62) de déchargement du réservoir (60) et une position fermée de l'ouverture inférieure (62) de déchargement,
l'engin (1) comporte au moins une traverse (611), servant de butée de fin de course à la au moins une trappe (610) en position ouverte,
la traverse (611) étant montée rotative par rapport au réservoir (60) autour d'un axe (616) de rotation entre plusieurs positions de rotation pour faire varier le degré d'ouverture de la au moins une trappe (610) en position ouverte,
l'engin (1) comportant un moyen (615) de réglage en rotation de la traverse (611) autour d'un axe transversal (616) de rotation, accessible de l'extérieur.

12. Engin roulant automoteur suivant la revendication 11, **caractérisé en ce que** le moyen (615) de réglage en rotation de la traverse (611) comporte une bague (618) solidaire de la traverse (611) sur l'axe transversal (616) de rotation,
la bague (618) traversant un trou (619), lequel est ménagé dans une paroi latérale (68, 69) située devant une paroi avant (66) du réservoir (60),
la bague (618) ayant une tête creuse (621) d'actionnement en rotation, qui est montée rotative dans le trou (619) et qui est accessible de l'extérieur.

13. Engin roulant automoteur suivant la revendication 12, **caractérisé en ce que** la tête creuse (621) d'actionnement en rotation comporte des pans creux (6210) non circulaires accessibles de l'extérieur.

## Patentansprüche

1. Selbstfahrendes rollendes Fahrzeug (1), insbesondere zum Aufbringen von losem Straßenbelagsmaterial auf den Boden, wobei das Fahrzeug (1) ein Fahrgestell (2), auf dem Boden rollende Räder (3, 4, 5) aufweist, die rotatorisch an dem Fahrgestell angebracht sind,
wobei das Fahrgestell (2) einen Antriebsmotor (6) für mindestens ein Antriebsrad (3, 4) von den rotierenden Rädern (3, 4, 5), einen Behälter (60) zur Lagerung und Ausgabe des losen Materials und eine hintere Manövrierlenkstange (7) trägt,
wobei der Behälter (60) mindestens eine untere Öffnung (62) zum Entladen des losen Materials aufweist, das Fahrzeug ferner eine untere Glättplatte (63) aufweist, wobei der Behälter (60) und die Glättplatte (63) eine Arbeitseinheit (64) bilden, die eine untere Angriffskante (65) aufweist, die quer zur Fahrtrichtung (X') des Fahrzeugs, das heißt gemäß der Breite des Fahrzeugs (1), angeordnet ist, wobei die Arbeitseinheit (64) über Verbindungsmittel (93) zur Verbindung mit dem Fahrgestell (2) relativ zum Fahrgestell (2) beweglich ist,
wobei die Verbindungsmittel (93) so ausgelegt sind, dass sie mindestens in der Position, in der die Räder (3, 4, 5) auf einem ebenen horizontalen Boden aufliegen und sich die Glättplatte (63) parallel zum Boden in einem Abstand von ungleich null vom Boden erstreckt, einerseits eine Höhenverstellung der Glättplatte (63) und der Entladeöffnung (62) relativ zum Fahrgestell (2) durch Anheben oder Absenken der Arbeitseinheit (64) in Richtung einer Entfernung von dem oder einer Annäherung an den Boden und andererseits eine Neigungsverstellung der Glättplatte (63) relativ zum Fahrgestell (2), so dass zwischen der Ebene der Glättplatte (63) und der Drehachse (34) des mindestens einen Antriebsrades (3, 4) ein Winkel ungleich null gebildet wird, zu ermöglichen,
**dadurch gekennzeichnet, dass**
die Verbindungsmittel (93) eine ebene vordere Führungsplatte (94) und eine ebene hintere Führungsplatte (95) umfassen, die an dem Behälter (60) befestigt sind, die zueinander parallel verlaufen, die sich quer gemäß der Breite des Fahrzeugs (1) und in der Höhe erstrecken und die zwischen sich einen Spalt (96) definieren,
die Verbindungsmittel (93) mindestens einen Längsträger (97) umfassen, der an dem Fahrgestell (2) befestigt ist und der in dem Spalt (96) gegen die vordere ebene Führungsplatte (94) und gegen die hintere ebene Führungsplatte (95) geführt wird, um zu ermöglichen, dass sich der Längsträger (97) parallel zu der vorderen ebenen Führungsplatte (94) und zu der hinteren ebenen Führungsplatte (95) quer gemäß der Breite des Fahrzeugs (1) und in der Höhe bewegt.

2. Selbstfahrendes rollendes Fahrzeug nach Anspruch 1, **dadurch gekennzeichnet, dass** die Verbindungsmittel (93) zwei unabhängig voneinander betätigbare seitliche Aktuatoren (91, 92) umfassen, die jeweils zwischen dem Fahrgestell (2) und der beweglichen Arbeitseinheit (64) angeordnet sind.

3. Selbstfahrendes rollendes Fahrzeug nach Anspruch 2, **dadurch gekennzeichnet, dass** die vordere ebene Führungsplatte (94) und die hintere ebene Führungsplatte (95) in Richtung der Breite zwischen den seitlichen Aktuatoren (91, 92) vorgesehen sind.

4. Selbstfahrendes rollendes Fahrzeug nach Anspruch 3, **dadurch gekennzeichnet, dass** die ebene vordere Führungsplatte (94) und die ebene hintere Führungsplatte (95) hinter einer Rückwand (67) des Behälters (60) befestigt sind.

5. Selbstfahrendes rollendes Fahrzeug nach Anspruch 4, **dadurch gekennzeichnet, dass** hinter der Rückwand (67) des Behälters (60) ein Pfosten (98) befestigt ist, an dem die vordere ebene Führungsplatte (94) und die hintere ebene Führungsplatte (95) befestigt sind, um den Distanzabstand des Spalts (96) zwischen diesen konstant zu halten.

6. Selbstfahrendes rollendes Fahrzeug nach Anspruch 5, **dadurch gekennzeichnet, dass** zwischen der vorderen ebenen Führungsplatte (94) und der hinteren ebenen Führungsplatte (95) und an dem Behälter (60) ein Abstandhalter (984) befestigt ist, um den Distanzabstand des Spalts (96) zwischen diesen konstant zu halten.

7. Selbstfahrendes rollendes Fahrzeug nach Anspruch 5 oder 6, **dadurch gekennzeichnet, dass** die vordere ebene Führungsplatte (94) an einer ersten, fest mit dem Pfosten (98) verbundenen Platine (981) befestigt ist.

8. Selbstfahrendes rollendes Fahrzeug nach einem der Ansprüche 5 bis 7, **dadurch gekennzeichnet, dass** die hintere ebene Führungsplatte (95) an einer zweiten Platine (982) befestigt ist, die an einem oberen Ansatz (983) des Pfostens (98) befestigt ist.

9. Selbstfahrendes rollendes Fahrzeug nach einem der Ansprüche 6 bis 8, wenn mindestens von Anspruch 6 abhängig, **dadurch gekennzeichnet, dass** die zweite Platine (982) nach unten im rechten Winkel nach vorne abgewinkelt ist, um den unter den Platten (94, 95) angeordneten Abstandhalter (984) zu bilden.

10. Selbstfahrendes rollendes Fahrzeug nach einem der Ansprüche 5 bis 9, **dadurch gekennzeichnet, dass** sich der Pfosten (98) über den Spalt (96) hinaus erstreckt.

11. Selbstfahrendes rollendes Fahrzeug nach einem der vorstehenden Ansprüche, **dadurch gekennzeichnet, dass** das Fahrzeug (1) in dem Behälter (60) zur Lagerung und Ausgabe von losem Material mindestens eine Klappe (610) aufweist, die um eine untere Querachse (613), die sich im Boden des Behälters (60) befindet, zwischen mindestens einer geöffneten Position einer unteren Entladeöffnung (62) des Behälters (60) und einer geschlossenen Position der unteren Entladeöffnung (62), betätigbar ist,
wobei das Fahrzeug (1) mindestens einen Querträger (611) aufweist, der als Endanschlag für die mindestens eine Klappe (610) in der geöffneten Position dient,
wobei der Querträger (611) relativ zu dem Behälter (60) um eine Drehachse (616) zwischen mehreren Drehstellungen rotatorisch angebracht ist, um den Öffnungsgrad der mindestens einen Klappe (610) in der geöffneten Position zu ändern,
wobei das Fahrzeug (1) eine von außen zugängliche Einrichtung (615) zur Drehverstellung des Querträgers (611) um eine quer verlaufende Drehachse (616) aufweist.

12. Selbstfahrendes rollendes Fahrzeug nach Anspruch 11, **dadurch gekennzeichnet, dass** die Einrichtung (615) zur Drehverstellung des Querträgers (611) einen Ring (618) umfasst, der auf der quer verlaufenden Drehachse (616) fest mit dem Querträger (611) verbunden ist,
wobei der Ring (618) eine Bohrung (619) durchquert, die in einer Seitenwand (68, 69) ausgebildet ist, die sich vor einer Vorderwand (66) des Behälters (60) befindet,
wobei der Ring (618) einen hohlen Drehbetätigungskopf (621) aufweist, der rotatorisch in der Bohrung (619) gelagert und der von außen zugänglich ist.

13. Selbstfahrendes rollendes Fahrzeug nach Anspruch 12, **dadurch gekennzeichnet, dass** der hohle Drehbetätigungskopf (621) von außen zugängliche, nicht kreisförmige Hohlseiten (6210) aufweist.

## Claims

1. Self-propelled vehicle (1), in particular for the ground-level laying of bulk road surfacing materials, the vehicle (1) comprising a chassis (2), ground-running wheels (3, 4, 5) mounted rotatably on the chassis,
the chassis (2) carrying a motor (6) for driving in rotation at least one drive wheel (3, 4) among the wheels (3, 4, 5), a hopper (60) for storing and dispensing the bulk materials, and a rear steering handlebar (7),
the hopper (60) comprising at least one lower opening (62) for discharging bulk materials, the machine further comprising a lower smoothing table (63), the hopper (60) and the smoothing table (63) form a working assembly (64) comprising a lower leading edge (65) arranged transversely to the direction (X') of travel of the machine, i.e. along the width of the machine (1), the working assembly (64) is movable relative to the chassis (2) by means of connecting means (93) to the chassis (2),
the connecting means (93) being configured to allow, at least in the position in which the wheels (3, 4, 5) rest on a flat horizontal ground and the smoothing table (63) extends parallel to the ground, at a non-zero distance from the ground, on the one hand, vertical movement of the smoothing table (63) and of the discharge opening (62) relative to the chassis (2) as the working assembly (64) is raised or lowered, moving away from or closer to the ground, and, on the other hand, an inclination movement of the smoothing table (63) relative to the chassis (2), so as to form a non-zero angle between the plane of the smoothing table (63) and the axis (34) of rotation of the at least one drive wheel (3, 4),
**characterised in that**
the connecting means (93) comprise a flat front guide plate (94) and a flat rear guide plate (95), which are secured to the hopper (60), which are parallel to one another, which extend transversely across the width of the vehicle (1) and along height, and which define a slot (96),
the connecting means (93) comprise at least one longitudinal member (97), which is secured to the chassis (2) and which is guided in the slot (96) against the front flat guide plate (94) and against the rear flat guide plate (95) to allow the longitudinal member (97) to move parallel to the front flat guide plate (94) and the rear flat guide plate (95) transversely across the width of the vehicle (1) and along height.

2. Self-propelled vehicle according to claim 1, **characterised in that** the connecting means (93) comprise two independently actuated lateral actuators (91, 92), each arranged between the chassis (2) and the movable working assembly (64).

3. Self-propelled vehicle according to claim 2, **characterised in that** the flat front guide plate (94) and the flat rear guide plate (95) are provided in the widthwise direction between the lateral actuators (91, 92).

4. Self-propelled vehicle according to claim 3, **characterised in that** the flat front guide plate (94) and the flat rear guide plate (95) are fixed behind a rear wall (67) of the hopper (60).

5. Self-propelled vehicle according to claim 4, **characterised in that** a strut (98) to which the front flat guide plate and the rear flat guide plate (95) are fixed in order to maintain a constant spacing of the gap (96) between them, is fixed behind the rear wall (67) of the hopper (60).

6. Self-propelled vehicle according to claim 5, **characterised in that** a spacer (984) is secured between the flat front guide plate (94) and the flat rear guide plate and to the hopper (60) to maintain a constant distance of the gap (96) between them.

7. A self-propelled vehicle according to claim 5 or 6, **characterised in that** the front flat guide plate (94) is secured to a first mounting plate (981) integral with the strut (98).

8. A self-propelled vehicle according to any one of claims 5 to 7, **characterised in that** the rear flat guide plate (95) is secured to a second mounting plate (982) secured to an upper bracket (983) of the strut (98).

9. A self-propelled vehicle according to any one of claims 6 to 8, where it depends on at least claim 6, **characterised in that** the second plate (982) is bent downwards at a right angle towards the front to form the spacer (984) arranged beneath the plates (94, 95).

10. A self-propelled vehicle according to any one of claims 5 to 9, **characterised in that** the strut (98) extends above the slot (96).

11. A self-propelled vehicle according to any one of the preceding claims, **characterised in that** the vehicle (1) comprises, in the hopper (60) for storing and dispensing bulk materials, at least one hatch (610) capable of being actuated about a lower transverse axis (613) located in the bottom of the hopper (60) between at least one open position of a lower discharge opening (62) of the hopper (60) and a closed position of the lower discharge opening (62),
the machine (1) comprises at least one cross-member (611), serving as an end-of-stroke stop to the at least one hatch (610) in the open position,
the cross-member (611) being mounted so as to rotate relative to the hopper (60) about an axis (616) of rotation between several rotational positions to vary the degree of opening of the at least one hatch (610) in the open position,
the vehicle (1) comprising a means (615) for adjusting the rotation of the cross-member (611) about a transverse axis (616) of rotation, accessible from the outside.

12. Self-propelled vehicle according to claim 11, **characterised in that** the means (615) for adjusting the rotation of the cross-member (611) comprises a ring (618) integral with the cross-member (611) on the transverse axis (616) of rotation,
the ring (618) passing through a hole (619), which is formed in a side wall (68, 69) situated in front of a front wall (66) of the hopper (60),
the ring (618) having a hollow rotary actuating head (621), which is rotatably mounted in the hole (619) and is accessible from the outside.

13. Self-propelled vehicle according to claim 12, **characterised in that** the hollow rotary actuating head (621) comprises non-circular hollow sections (6210) accessible from the outside.
